# EUROPEAN PATENT SPECIFICATION

(11) **EP 2 786 837 B1**
(45) Date of publication and mention of the grant of the patent: **16.09.2015**
(21) Application number: 13162283.9
(22) Date of filing: 04.04.2013
(51) Int. Cl.: B23P 15/00, B25B 13/06, G09F 7/00, B25B 13/56, C25D 5/02, C25D 7/00, C25D 11/02

(54) **Method for marking a tool**
Verfahren zum Markieren eines Werkzeugs
Procédé de marquage d'un outil

(43) Date of publication of application: 08.10.2014
(73) Proprietor: Pard Hardware Industrial Co., Ltd., Taichung City 407 (TW)
(72) Inventor: Lin, Da-Sen, Taichung City 407 (TW)
(74) Representative: Lang, Christian

(56) References cited:
- EP-A1- 1 947 218
- TW-A- 201 134 614
- US-A1- 2004 144 214
- US-A1- 2009 288 522
- US-A1- 2010 180 659

## Description

### BACKGROUND OF INVENTION

### 1. Field of Invention

The present invention relates to a tool and, more particularly, to a method for marking a tool so that the tool bears a clear, durable and aesthetic mark.

### 2. Related Prior Art

People drive threaded bolts and nuts of various shapes and sizes with tools such as open-ended wrenches, box-ended wrenches, monkey wrenches, socket wrenches or screwdrivers. A toolkit may include a handle and a set of sockets and/or screwdriver bits of various shapes and sizes. In operation, the handle is connected to a selected one of the sockets and/or screwdriver bits for driving a threaded bolt or nut of a certain shape and size. Thus, a toolkit can be used to drive threaded bolts and nuts of various shapes and sizes.

It is important to mark the tools to indicate their sizes and/or carry trademarks, logos and/or patterns. Conventionally, printing machines are used to print the tools with marks. Such printing machines are however expensive. Moreover, the printed marks are unclear for inadequate contrast to the background.

There has been an attempt to provide plastic collars of different colors on the tools. The plastic collars could easily be blurred, damaged or detached from the tools so that the tools would be poorly marked or not marked at all.

Pressing machines may alternatively be used to indent the tools with marks. Such pressing machines are however expensive. In addition, the indented marks are unclear. This problem will be even worse when the indented marks are filled with dirt and grease after some time of use.

A tool may be provided with a coating via electroplating after the indented mark is made. The coating is provided on the tool in and outside the indented mark. The coating protects the tool from rust. The coating is however unclear since the color of the portion of the tool within the indented mark is identical to the color of the portion of the tool outside the indented mark.

A tool may alternatively be provided with manganese phosphate after the indented mark is made. The manganese phosphate protects the tool from rust. The manganese phosphate however makes the tool look black and blur the indented mark.

Document EP 1 947 218 A1 discloses a method for marking a tool.

Therefore, the present invention is intended to obviate or at least alleviate the problems encountered in prior art.

### SUMMARY OF INVENTION

It is the primary objective of the present invention to provide an effective method for marking a tool.

To achieve the foregoing objective, the method includes the steps of claim 1.

Preferred embodiments are presented in the dependent claims.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a flow chart of a method for marking a tool according to the present invention;
FIG. 2 is a perspective view of an extension rod at the beginning of the method shown in FIG. 1;
FIG. 3 is a partial, cross-sectional view of the extension rod after an anodizing step and a printing step of the method according to the first embodiment of the present invention;
FIG. 4 is a partial, cross-sectional view of the extension rod after a black dying step and a printing step of the method according to the second embodiment of the present invention;
FIG. 5 is a partial, cross-sectional view of the extension rod after a coating step of the method according to the first embodiment of the present invention;
FIG. 6 is a partial, cross-sectional view of the extension rod after a coating step of the method according to the second embodiment of the present invention;
FIG. 7 is a perspective view of the extension rod made in the method shown in FIG. 1;
FIG. 8 is a perspective view of a socket marked in the method shown in FIG. 1;
FIG. 9 is a perspective view of a wrench marked in the method shown in FIG. 1;
FIG. 10 is a perspective view of a screwdriver bit marked in the method shown in FIG. 1; and
FIG. 11 is a perspective view of a screwdriver marked in the method shown in FIG. 1.

### DETAILED DESCRIPTION OF EMBODIMENTS

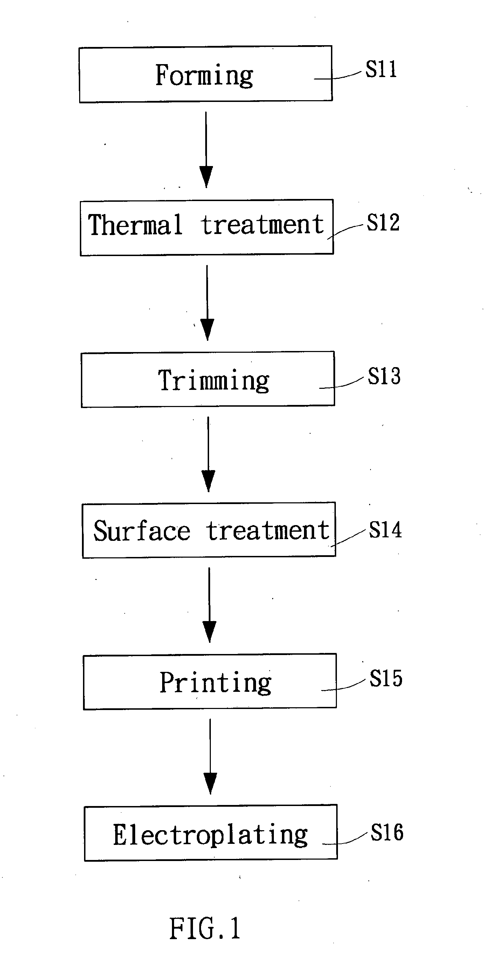

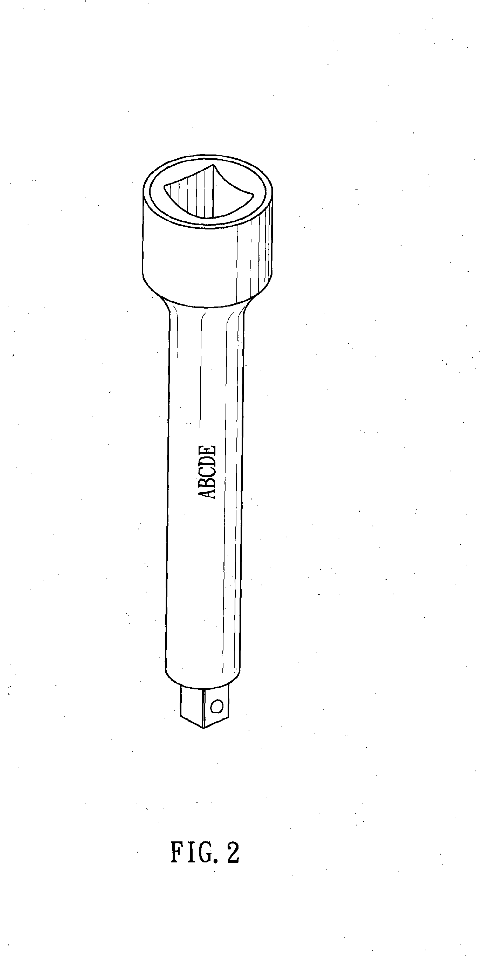

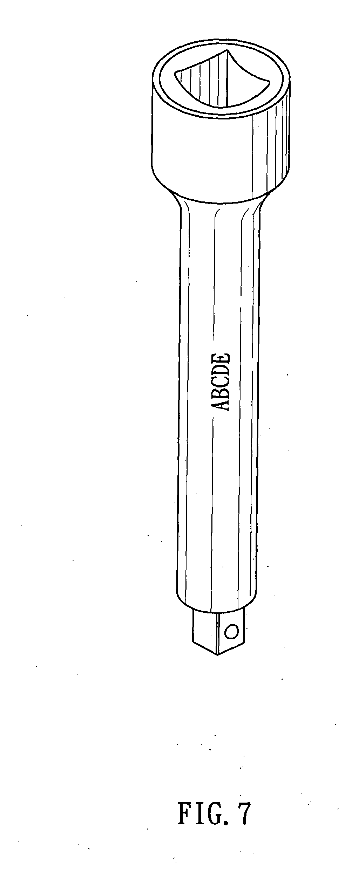

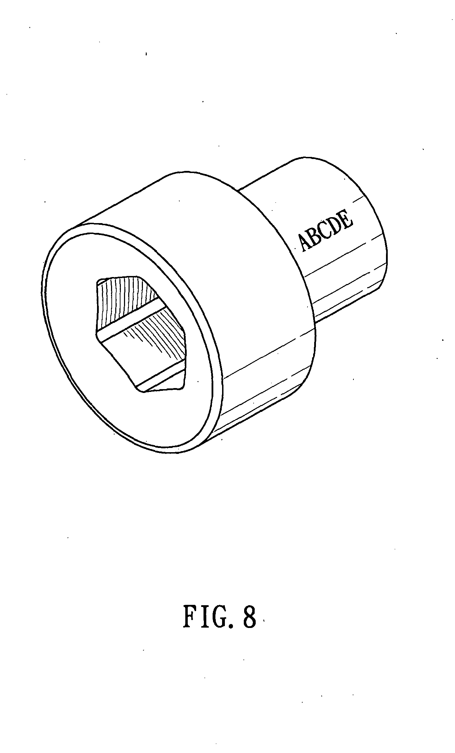

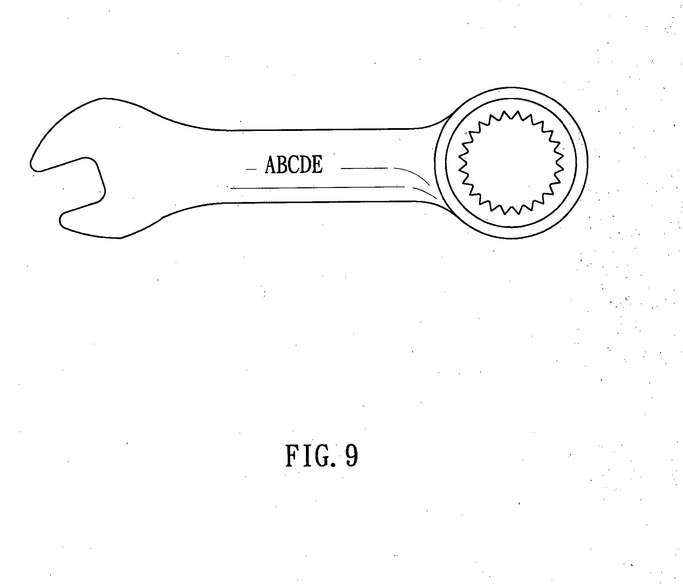

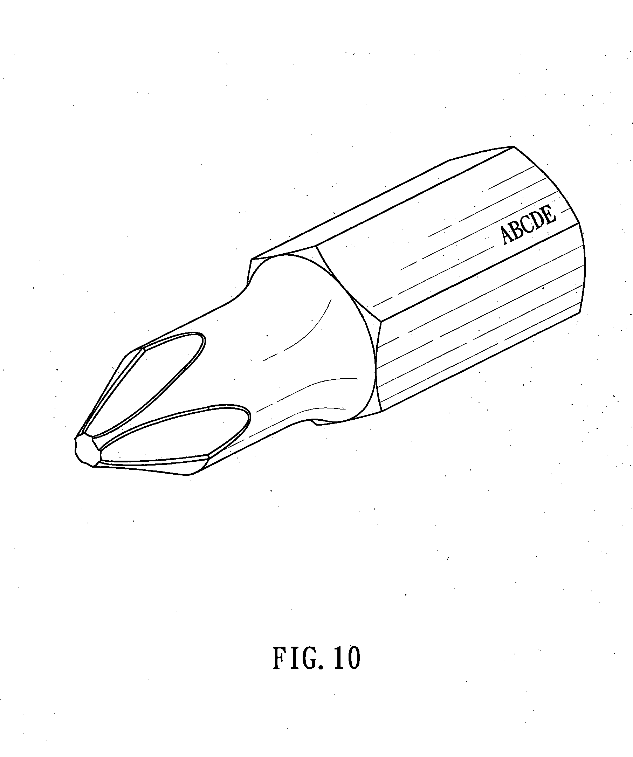

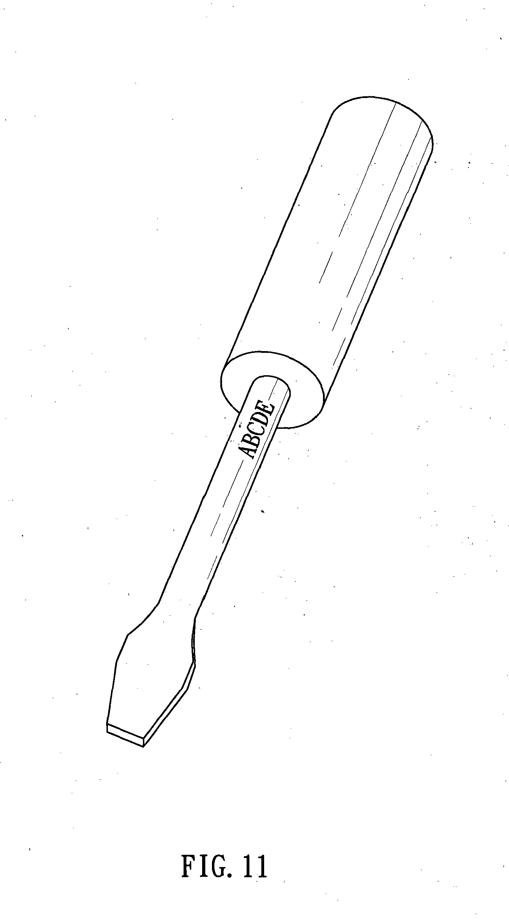

Referring to FIG. 1, there is shown a method for marking a tool according the present invention. The tool may be an extension rod shown in FIGS. 2 through 7, a socket shown in FIG. 8, a wrench shown in FIG. 9, a screwdriver bit shown in FIG. 10 or a screwdriver shown in FIG. 11. The method will be described in relation to the extension rod shown in FIGS. 2 through 7 for example.

Referring to FIGS. 1 and 2, at S11, there is provided a tool 10 in the form of an extension rod. The tool 10 is made by lathing and/or casting for example. The tool 10 includes a square recess for receiving a portion of a handle and a square insert for insertion in a square recess of a socket or a screwdriver bit.

At S12, the tool 10 is subject to thermal treatment to increase the hardness of thereof. Thus, the tool 10 is not vulnerable to wearing.

At S13, the tool 10 is subject to trimming (or "paring") to clear the surface thereof of burrs and/or grains that occur during the forming and/or thermal treatment. The trimming is done by vibration grinding or polishing. The vibration grinding or polishing could further clear the surface of the tool 10 of oil, grease, dust and/or any other form of contamination. Thus, the tool 10 can be subject further processing with excellent effects.

At S14, the tool 10 is subject to surface treatment to provide the surface thereof with a protection layer.

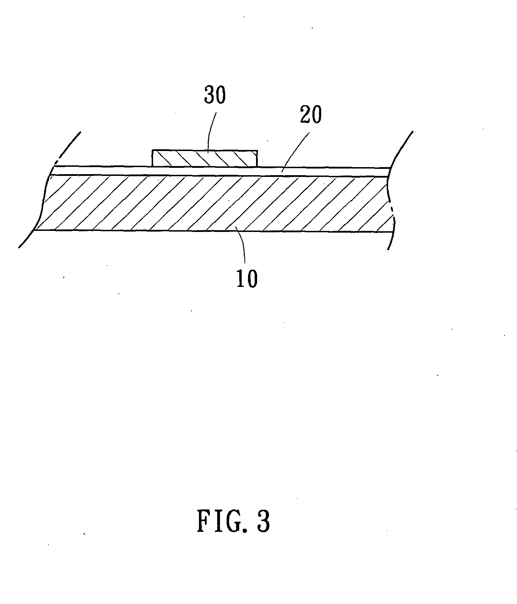

Referring to FIGS. 1 and 3, the surface treatment involves anodizing according to a first embodiment of the present invention. Hence, the protection layer is a layer of anodizing 20.

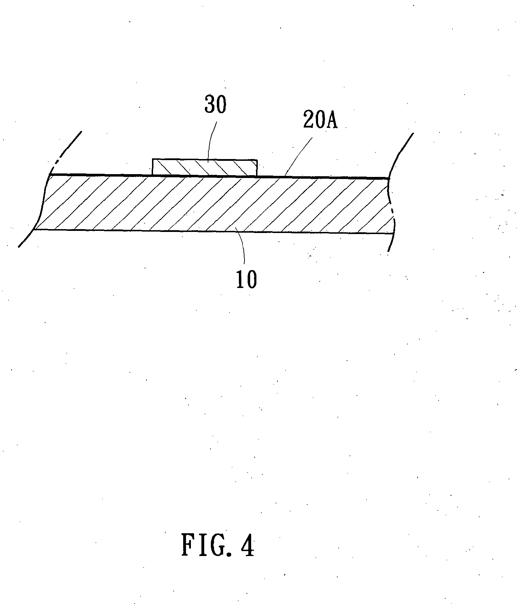

Referring to FIGS. 1 and 4, the surface treatment involves black dying or manganese phosphate according to a second embodiment. Hence, the protection layer is a layer of black dying 20A.

At S15, the tool 10 is subject to printing to provide a mark 30 on a portion of the protection layer.

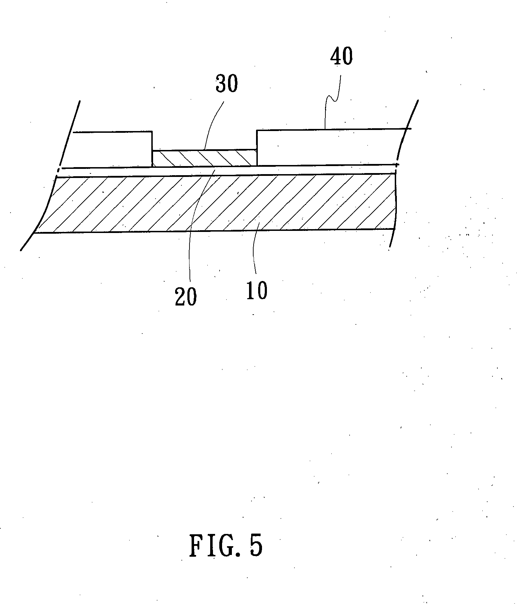

Referring to FIGS. 1 and 5, the mark 30 is provided on the layer of anodizing 20 according to the first embodiment of the present invention.

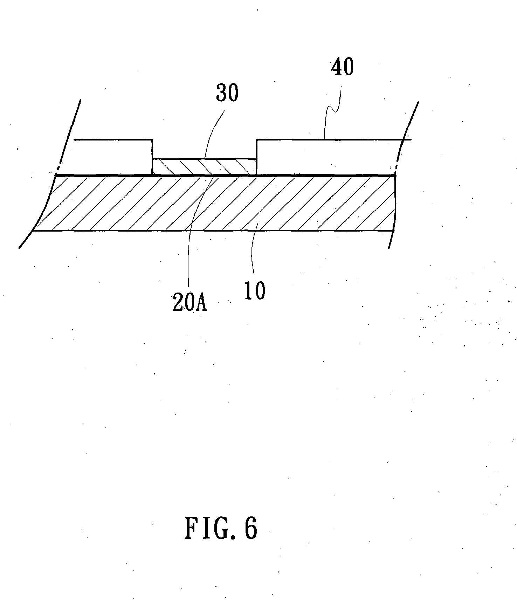

Referring to FIGS. 1 and 6, the mark 30 is provided or the layer of black dying 20A according to the second embodiment of the present invention.

The mark 30 may include at least one letter, numeral, character or pattern. The mark 30 is in a color that is in strong contrast to the layer of anodizing 20 or black dying 20A. Therefore, the mark 30 looks clear amid the layer of anodizing 20 or black dying 20A.

At S16, the tool 10 is electroplated with a transparent layer 40 on the remaining portion of the layer of anodizing 20 or black dying 20A. As electroplating only occurs on metal, the electroplating only occurs on the layer of anodizing 20 or black dying 20A, i.e., the mark 30 is not covered by the transparent layer 40.

The transparent layer 40 glistens in light. Moreover, the transparent layer 40 protects the layer of anodizing 20 or black dying 20A from rust. In addition, the thickness of the transparent layer 40 is much larger than that of the mark 30. A large portion of the transparent layer 40 must be worn away before the mark 30 can be worn. Thus, the transparent layer 40 protects the mark 30 from peeling in collision or rubbing. Hence, the clear visibility of the mark 30 amid the layer or anodizing 20 or black dying 20A lasts for a long period of time.

The tool 10 exhibits at least two advantages. At first, the mark 30 looks clear amid the layer of anodizing 20 or black dying 20A since they are in strong contrast to each other. Secondly, the clear visibility of the mark 30 amid the layer of anodizing 20 or black dying 20A lasts long since both of the mark 30 is placed much deeper than the transparent layer 40.

The present invention has been described via the detailed illustration of the embodiments. Those skilled in the art can derive variations from the embodiments without departing from the scope of the present invention as defined in the claims.

## Claims

1. A method for marking a tool, the method including the steps of:
forming a tool (10);
hardening the tool (10);
trimming the tool (10);
providing the tool (10) with a protection layer (20, 20A);
printing the tool (10) with a mark (30); and
providing a transparent layer (40) on the protection layer (20, 20A) except the mark (30), wherein the thickness of the transparent layer (40) is larger than the thickness of the mark (30).

2. The method according to claim 1, wherein the tool is selected from the group consisting of an extension rod, a socket, a wrench, a screwdriver and a screwdriver bit.

3. The method according to claim 1, wherein the step of forming the tool (10) includes at least one step selected from the group consisting of lathing and casting.

4. The method according to claim 1, wherein the step of hardening includes the step of thermal treatment.

5. The method according to claim 1, wherein the step of trimming the tool (10) includes at least one step selected from the group consisting of vibration grinding and polishing.

6. The method according to claim 1, wherein the step of providing the protection layer is selected from the group consisting of anodizing and black dying.

7. The method according to claim 6, wherein the step of black dying includes the step of providing a material selected from the group consisting of black dying and manganese phosphate.

8. The method according to claim 1, wherein the mark (30) includes at least one symbol selected from the group consisting of a letter, a numeral, a character and a pattern.

9. The method according to claim 1, wherein the step of providing the transparent layer (40) includes the step of electroplating.

## Patentansprüche

1. Verfahren zum Markieren eines Werkzeugs, wobei das Verfahren die Schritte umfasst:
Herstellung eines Werkzeugs (10),
Härten des Werkzeugs (10),
Entgraten des Werkzeugs (10),
Aufbringen einer Schutzschicht (20, 20A) auf das Werkzeug (10),
Bedrucken des Werkzeugs (10) mit einer Markierung (30), und
Aufbringen einer transparenten Schicht (40) auf die Schutzschicht (20, 20A) außer an der Markierung (30), wobei die Dicke der transparenten Schicht (40) größer ist als die Dicke der Markierung (30).

2. Verfahren nach Anspruch 1, wobei das Werkzeug ausgewählt ist aus einer Gruppe, welche einen Verlängerungsstab, einen Steckschlüssel, einen Schraubenschlüssel, einen Schraubendreher und einen Schraubendrehereinsatz umfasst.

3. Verfahren nach Anspruch 1, wobei der Schritt zur Herstellung des Werkzeugs (10) wenigstens einen Schritt beinhaltet, der aus einer Gruppe ausgewählt ist, die Drehen und Gießen umfasst.

4. Verfahren nach Anspruch 1, wobei der Schritt zum Härten einen Schritt zur thermischen Behandlung beinhaltet.

5. Verfahren nach Anspruch 1, wobei der Schritt zum Entgraten des Werkzeugs (10) wenigstens einen Schritt beinhaltet, der aus einer Gruppe ausgewählt ist, die Vibrationsschleifen und Polieren umfasst.

6. Verfahren nach Anspruch 1, wobei der Schritt zur Bereitstellung der Schutzschicht aus einer Gruppe ausgewählt ist, die Eloxieren und Schwarzfärben umfasst.

7. Verfahren nach Anspruch 6, wobei der Schritt des Schwarzfärbens einen Schritt zur Bereitstellung eines Materials beinhaltet, welches aus einer Gruppe ausgewählt ist, die schwarze Farbe und Manganphosphat umfasst.

8. Verfahren nach Anspruch 1, wobei die Markierung (30) wenigstens ein Symbol beinhaltet, das aus einer Gruppe ausgewählt ist, welche Buchstaben, Ziffern, Zeichen und Muster umfasst.

9. Verfahren nach Anspruch 1, wobei der Schritt zur Bereitstellung der transparenten Schicht (40) einen Galvanisierungsschritt beinhaltet.

## Revendications

1. Procédé de marquage d'un outil, le procédé comprenant les étapes consistant à ;
former un outil (10) ;
durcir l'outil (10) ;
ébarber l'outil (10) ;
fournir une couche de protection (20, 20A) sur l'outil (10) ;
imprimer une marque (30) sur l'outil (10) ; et
fournir une couche transparente (40) sur la couche de protection (20, 20A) à l'exception de la marque (30), dans lequel l'épaisseur de la couche transparente (40) est plus importante que l'épaisseur de la marque (30).

2. Procédé selon la revendication 1, dans lequel l'outil est choisi dans le groupe constitué par une rallonge de tige d'ancrage, par une douille, par une clé, par un tournevis et par un embout de tournevis.

3. Procédé selon la revendication 1, dans lequel l'étape de formation de l'outil (10) comprend au moins une étape choisie dans le groupe constitué par un lattage et par un moulage.

4. Procédé selon la revendication 1, dans lequel l'étape de durcissement comprend l'étape consistant en un traitement thermique.

5. Procédé selon la revendication 1, dans lequel l'étape d'ébarbage de l'outil (10) comprend au moins une étape choisie dans le groupe constitué par une rectification par vibration et par un polissage.

6. Procédé selon la revendication 1, dans lequel l'étape de fourniture de la couche de protection est choisie dans le groupe constitué par une anodisation et par une coloration en noir.

7. Procédé selon la revendication 6, dans lequel l'étape de coloration en noir comprend l'étape de fourniture d'un matériau choisi dans le groupe constitué par une coloration noire et par un phosphate de manganèse.

8. Procédé selon la revendication 1, dans lequel la marque (30) comprend au moins un symbole choisi dans le groupe constitué par une lettre, par un chiffre, par un caractère et par un dessin.

9. Procédé selon la revendication 1, dans lequel l'étape de fourniture de la couche transparente (40) comprend l'étape d'un dépôt électrolytique.
